# EUROPÄISCHE PATENTSCHRIFT

(11) **EP 2 233 317 B1**
(45) Veröffentlichungstag und Bekanntmachung des Hinweises auf die Patenterteilung: **16.05.2012**
(21) Anmeldenummer: 10152739.8
(22) Anmeldetag: 05.02.2010
(51) Int. Cl.: B60C 1/00, C08L 7/00, C08L 9/00, C08L 21/00, C08J 3/20

(54) **Kautschukmischung mit verbessertem Steifigkeitsverhalten und Verfahren zu deren Herstellung**
Natural rubber mixture with improved resistance and production method for same
Mélange de caoutchouc ayant un comportement en rigidité amélioré et son procédé de fabrication

(30) Priorität: 25.03.2009 DE 102009003669
(43) Veröffentlichungstag der Anmeldung: 29.09.2010
(73) Patentinhaber: Continental Reifen Deutschland GmbH, 30165 Hannover (DE)
(72) Erfinder: Gausepohl, Rolf, Dr., 76149, Karlsruhe (DE); Wagemann, Jürgen, Dr., 31162, Bad Salzdethfurth (DE); Recker, Carla, Dr., 30167, Hannover (DE); Härtel, Volker, Dr., 82110, Germering (DE); Preusser, Andrea, Dr., 37077, Göttingen (DE); Van de Pol, Casper, 30974 Sorsum (DE); Peter, Julius, Dr., 1130, Wien (AT)
(74) Vertreter: Finger, Karsten

(56) Entgegenhaltungen:
- EP-A1- 0 763 558
- EP-A1- 0 903 367
- EP-A1- 1 911 606
- US-A1- 2006 106 149

## Beschreibung

Die Erfindung betrifft eine Kautschukmischung mit verbessertem Steifigkeitsverhalten, insbesondere für Fahrzeugluftreifen, Gurte und Riemen, und ein Verfahren zu deren Herstellung.

Da die Fahreigenschaften eines Reifens, insbesondere eines Fahrzeugreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten und der weiteren Zuschlagstoffe in der Laufstreifenmischung positiv zu beeinflussen. Als Zuschlagstoffe seien beispielhaft an dieser Stelle Füllstoffe, z. B. Ruß und Kieselsäure, und weitere, Weichmacher, Alterungsschutzmittel und Vernetzungssysteme aus Schwefel, Beschleuniger und Aktivator genannt. Wird durch Variation der Mischung eine Eigenschaft verbessert, geht dies aber häufig mit einer Verschlechterung einer anderen Eigenschaft einher, so dass gewisse Zielkonflikte vorliegen. Bei Mischungen für Laufstreifen von Fahrzeugreifen bestehen solche Zielkonflikte beispielsweise im Hinblick auf die thermische Erweichung, folglich des Rollwiderstands, und der Steifigkeit.

Es ist beispielsweise bekannt, zur Erhöhung der Steifigkeit der Vulkanisate eines gegebenen Mischungssystems, gemessen über den Spannungswert bei Dehnung, den Füllgrad, d.h. den Anteil an Füllstoff in der Mischung, zu erhöhen, einen Füllstoff mit aktiver Oberfläche zu verwenden, die Vernetzungsdichte zu erhöhen oder ein spezielles Polymersystem zu verwenden. Die vorgenannten Maßnahmen führen dabei aber zwangsläufig zu einer Verschlechterung weiterer physikalischer Eigenschaften der Vulkanisate, wie z.B. Abriebsverhalten und Nassrutschverhalten.

Dem Fachmann ist außerdem bekannt, dass der Mischprozess, ergo die Art und Weise, wie die Kautschukmischung hergestellt wird, einen großen Einfluss auf das physikalische Verhalten des Vulkanisats und des daraus resultierenden Gummiartikels, wie Fahrzeugluftreifen, Riemen und Gurte, hat.

Im Allgemeinen erfolgt die Herstellung einer Kautschukmischung in zwei Mischstufen, nämlich durch Herstellung einer Grundmischung und einer Fertigmischung. Während der Herstellung der Grundmischung werden alle Bestandteile der Mischung, wie Kautschuke, Füllstoffe (meist Kieselsäure und / oder Ruß), Verarbeitungshilfsmittel, Kupplungsagenzien, Alterungsschutzmittel, Ozonschutzmittel und weitere übliche Zusatzstoffe mit Ausnahme der Vulkanisationschemikalien (Schwefel, Vulkanisationsbeschleuniger, Harze u. a.), miteinander unter Energieeintrag vermischt. Dabei versucht man in der Regel, eine möglichst schnelle und gleichmäßige Verteilung der Bestandteile zu erzielen. Zur Verbesserung der Verarbeitbarkeit und um eine bessere Verteilung von Kieselsäure, die eine große spezifische hydrophile Oberfläche aufweist, in der Kautschukmischung zu erzielen, müssen in der Grundmischung in der Regel Kupplungsagenzien, vor allem in der Form von Silanen, zugesetzt werden, die gleichzeitig zur Hydrophobierung der Kieselsäureoberfläche auch in der später folgenden Vulkanisation eine chemische Anbindung an die umgebenden Kautschukmoleküle ermöglichen. Nach der Fertigstellung der Grundmischung, deren Abkühlung und eventueller Lagerung werden dann zur Herstellung der Fertigmischung die restlichen Zusatzstoffe, i. A. die Vulkanisationschemikalien, bei niedriger Temperatur eingemischt.

Aus der EP 0 763 558 A1 ist eine Variante zur kostengünstigen Herstellung einer Kieselsäure und Ruß enthaltenden Kautschukmischung bekannt, bei der zunächst die gesamte Kieselsäure innig in einem ersten Kautschuk oder Kautschukverschnitt dispergiert wird und getrennt davon der größte Teil des Rußes in einem zweiten Kautschuk oder Kautschukverschnitt dispergiert wird. Die beiden so erstellten Vormischungen werden dann unter Bildung einer heterogenen Kieselsäure/Ruß-gefüllten Kautschukmischung vereinigt. Unter "heterogen" ist dabei zu verstehen, dass nach dem Zusammenmischen der Vormischungen eine höhere Konzentration von Kieselsäure in einer Phase vorliegt und einer höhere Konzentration von Ruß in einer anderen Phase, eine möglichst gleichmäßige Verteilung in allen Phasen soll nicht erreicht werden. Dabei wird unter anderem vorgeschlagen, als ersten Kautschuk Naturkautschuk und als zweiten Kautschuk lösungspolymerisiertes Styrol-Butadien-Copolymer zu verwenden.

Die EP 0 903 367 A1 offenbart ebenfalls ein Verfahren zur Herstellung von Kieselsäure und Ruß enthaltenden heterogenen Kautschukmischungen, bei dem zunächst getrennt voneinander zwei unterschiedliche Fertigmischungen erzeugt werden, also Mischungen hergestellt werden, die bereits jeweils ein Vulkanisationssystem enthalten. Die beiden Fertigmischungen werden zusammengeführt und ohne Zugabe von weiteren Bestandteilen vulkanisiert. Die Vulkanisate (z. B. Reifenlaufstreifen) besitzen aufgrund dieser Mischungsherstellung eine heterogene Struktur, die es möglich machen soll, z. B. dem Reifenlaufstreifen eine bessere Leitfähigkeit zu verleihen.

Die mit den in der EP 0 763 558 A1 und der EP 0 903 367 A1 vorgeschlagenen Verfahren hergestellten heterogenen Laufstreifenmischungen haben allerdings den Nachteil, dass bestimmte Reifeneigenschaften, wie z. B. der Abrieb und das Nassrutschverhalten, in Mitleidenschaft gezogen werden.

Der Erfindung liegt die zum einen die Aufgabe zu Grunde, eine Kautschukmischung, insbesondere für Fahrzeugluftreifen, Gurte und Riemen, die ein verbessertes Steifigkeitsverhalten, vor allem bei niedrigen Temperaturen, besitzt bereitzustellen.

Gelöst wird diese Aufgabe durch eine Kautschukmischung, die aus einer ersten Phase A, die zumindest einen polaren oder unpolaren Kautschuk, zumindest eine Kieselsäure und zumindest einen Weichmacher enthält, und einer zweiten Phase B, die zumindest einen polaren oder unpolaren Kautschuk, zumindest eine Kieselsäure und zumindest einen Weichmacher enthält, besteht.

Überraschenderweise wurde gefunden, dass sich durch eine Kautschukmischung mit einem gemäß Kennzeichen des Anspruchs 1 definiertem heterogenen Aufbau aus zwei Phasen sich das Steifigkeitsverhalten, insbesondere bei niedrigen Temperaturen, deutlich verbessert. Des Weiteren zeigt sich überraschend ein positiver Einfluss auf den so genannten Grip und auf das Steifigkeitsverhalten der damit hergestellten Reifen. Dies gilt nicht nur für den Laufstreifen, sondern auch für die Base und für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen und Gurte. Diese technischen Gummiartikel finden im täglichen Leben überall Verwendung, z.B. in Aufzügen, in der Automobilindustrie und in der Rohstoffindustrie. Insbesondere bei Einsatz von Fördergurten unter Permafrost- oder arktischen Bedingungen kommt dem Steifigkeitsverhalten bei niedrigen Temperaturen eine relevante Bedeutung zu.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Als Phase wird in dieser Schrift ein hinsichtlich physikalischer und / oder chemischer Eigenschaften homogener Bereich definiert. Diese Definition ist auch dem Fachmann geläufig und hat sich allgemein in den Ingenieurs- und Naturwissenschaften etabliert.

Die erfindungsgemäße Kautschukmischung besteht aus einer ersten Phase A, die zumindest einen polaren oder unpolaren Kautschuk, zumindest eine Kieselsäure und zumindest einen Weichmacher enthält, und einer zweiten Phase B, die zumindest einen polaren oder unpolaren Kautschuk, zumindest eine Kieselsäure und zumindest einen Weichmacher enthält, wobei bevorzugt ist, wenn sie 60 - 80 % der ersten Phase A und 20 - 40 % der zweiten Phase B, bezogen auf das Gesamtvolumen, enthält.

Die erste Phase A und / oder die zweite Phase enthält bzw. enthalten zumindest einen polaren oder unpolaren Kautschuk, wobei der polare oder unpolare Kautschuk oder die polaren oder unpolaren Kautschuke der ersten Phase A unterschiedlich ist bzw. sind im Vergleich zu dem polaren oder unpolaren Kautschuk oder den polaren oder unpolaren Kautschuken der zweiten Phase B. Der polare oder unpolare Kautschuk oder die polaren oder unpolaren Kautschuke der ersten Phase A ist bzw. sind bevorzugt thermodynamisch nicht mischbar mit dem polaren oder unpolaren Kautschuk oder den polaren oder unpolaren Kautschuken der zweiten Phase B und bilden daher inhomogene Dispersionen mit einer sog. Inselstruktur..

Der polare oder unpolare Kautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder Halonitrilbutylkautschuk und / oder Isopren-Butadien-Copolymer.

Der polare oder unpolare Kautschuk kann dabei jeweils ganz oder teilweise hydriert sein.

Insbesondere Styrol-Isopren-Butadien-Terpolymer, Butylkautschuk, Halobutylkautschuk, Nitrilkautschuk, Halonitrilkautschuk, Chloroprenkautschuk, Naturkautschuk oder Ethylen-Propylen-Dien-Kautschuk kommen bei der Herstellung von technischen Gummiartikeln, wie Gurte und Riemen, zum Einsatz.

Bevorzugt ist es allerdings, wenn der polare oder unpolare Kautschuk der ersten Phase A ein natürliches und / oder synthetisches Polyisopren ist und der polare oder unpolare Kautschuk der zweiten Phase ein Butadien-Kautschuk, bevorzugt mit einem Vinyl-Anteil von größer oder gleich 50 Gew. -%, und / oder ein Styrolbutadienkautschuk ist, der lösungspolymerisiert oder emulsionspolymerisiert sein kann.

Zumindest ein verwendeter Kautschuk der ersten Phase A und / oder der zweiten Phase B kann funktionalisiert sein. Die Funktionalisierung ist dabei mit Gruppen, die mit den verwendeten Füllstoffen, insbesondere mit OH-Gruppen tragenden Füllstoffen, wechselwirken können. Es handelt sich um eine Funktionalisierung mit Hydroxylgruppen und / oder Epoxygruppen und / oder Siloxangruppen und / oder Aminogruppen und / oder Phtalocyaningruppen.

Der Kautschuk der ersten Phase A und / oder der zweiten Phase B kann auch nicht funktionalisiert sein, so dass in der gesamten Kautschukmischung oder in den einzelnen Phasen entweder alle Kautschuke, ein Teil der Kautschuke oder kein Kautschuk funktionalisiert sind bzw. ist.

Ebenso kann der Kautschuk der ersten Phase A und / oder der zweiten Phase B kann jeweils gekoppelt sein, so dass in der gesamten Kautschukmischung oder in den einzelnen Phasen entweder alle Kautschuke, ein Teil der Kautschuke oder kein Kautschuk gekoppelt sind bzw. ist.

Die erste Phase A und die zweite Phase B der erfindungsgemäßen Kautschukmischung enthalten jeweils zumindest ein Kieselsäure. Dabei handelt es sich bevorzugt um einen hellen Füllstoff. Die Gesamtmenge an Füllstoff der einzelnen Phase kann aus einer Kombination von hellen und dunklen Füllstoffen bestehen. Konkret bedeutet dies, dass in der ersten Phase A und / oder in der zweiten Phase B jeweils nur ein Füllstoffe oder jeweils zwei verschiedene Füllstoffe, bevorzugt Kieselsäure und Ruß, vorhanden ist bzw. sind.

Es ist aber durchaus möglich, der einzelnen Phase noch weitere, dem Fachmann bekannten Füllstoffe, wie Schichtsilikate, Aluminiumoxide, etc., hinzuzufügen.

Der helle Füllstoff ist Kieselsäure, bevorzugt Fällungskieselsäure.

Die einzelne Phase enthält 0 - 200 phr, bevorzugt 0 - 150 phr, besonders bevorzugt 0 - 120 phr, wiederum besonders bevorzugt 0 - 90 phr, wenigstens 0,1 phr, insbesondere wenigstens 0,5 phr, Kieselsäure.

Wichtig ist hierbei, dass der Anteil der Kieselsäure aus der ersten Phase A am Gesamtgehalt der Kieselsäure in der erfindungsgemäßen Kautschukmischung ungleich des Anteils der Kieselsäure aus der zweiten Phase B ist.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Erfindungsgemäß werden Kieselsäuren mit einer Stickstoff-Oberfläche größer oder gleich 120 m²/g, bevorzugt zwischen 120 und 300 m²/g, besonders bevorzugt zwischen 150 und 250 m²/g, und einer CTAB-Oberfläche zwischen 120 und 230 m²/g, bevorzugt zwischen 140 und 200 m²/g, eingesetzt.

Die Kieselsäure der ersten Phase A und die Kieselsäure der zweiten Phase B sind jeweils durch ein Kupplungsagens an die Polymermatrix ihrer jeweiligen Phase angebunden. Dazu können alle dem Fachmann bekannten und in der Kautschukindustrie üblicherweise eingesetzten Kupplungsagenzien Verwendung finden, bevorzugt ist es allerdings, wenn es sich dabei um eine siliziumorganische Verbindung handelt, bei der zumindest ein Kohlenstoffatom direkt an das Siliziumatom geknüpft ist und bis zu drei weitere Kohlenstoffhaltige Liganden über wenigstens ein Sauerstoffatom und / oder wenigstens ein Stickstoffatom und / oder maximal zwei Schwefelatome geknüpft sind. Der direkt mit einer Si-C-Bindung verknüpfte Ligand enthält vorzugsweise eine in der Schwefelvulkanisation aktive Funktionalität. Die siliziumorganische Verbindung der ersten Phase A kann dabei gleich oder verschieden der siliziumorganischen Verbindung der zweiten Phase B sein.

In einer besonders bevorzugten Ausführungsform handelt es sich bei der siliziumorganischen Verbindung der ersten Phase A und / oder der zweiten Phase B um Bis(Triethoxysilyl-alkyl)disulfid oder Bis(Triethoxysilyl-alkyl)tetrasulfid oder Bis(Triethoxysilyl-alkyl)monosulfid oder (Triethoxysilyl-alkyl)mercaptosilan oder ein anderes Mercaptosilan.

Die so genannten Mercaptosilane sind besonders zu erwähnen und hierbei insbesondere solche, welche sich durch eine Reduzierung der leicht flüchtigen organischen Bestandteile auszeichnen, wie sie, beispielhaft für weitere Druckschriften, in DE102005057801, WO99/09036, WO2002/048256 und WO2006/015010 zu finden sind.

Die siliziumorganische Verbindung kann aber auch ausgewählt werden aus den Silanen, wie sie unter anderem aus US11/617,649 und / oder US11/617,659 und / oder US11/617,663 und / oder US11/617,678 und / oder US11/617,683 bekannt sind.

Bevorzugt ist es, wenn die Minoritätsphase Bis(Triethoxysilyl-alkyl)tetrasulfid und / oder (Triethoxysilyl-alkyl)mercaptosilan oder ein anderes Mercaptosilan enthält und / oder die Majoritätsphase kein Bis(Triethoxysilyl-alkyl)tetrasulfid und / oder (Triethoxysilyl-alkyl)mercaptosilan oder ein anderes Mercaptosilan enthält.

Die Menge des Kupplungsagens der einzelnen Phase beträgt jeweils 0 - 20 phr, bevorzugt 0 - 15 phr, besonders bevorzugt 0 - 10 phr, wenigstens 0,1 phr, insbesonders wenigstens 0,5 phr. Die Menge des Kupplungsagens der ersten Phase A kann dabei gleich oder verschieden sein von der Menge des Kupplungsagens der zweiten Phase B.

Bei dem dunklen Füllstoff handelt es sich bevorzugt um Ruß und zwar bevorzugt in Mengen von 0 - 150 phr, besonders bevorzugt in Mengen von 0 - 100 phr, wiederum besonders bevorzugt in Mengen von 0 - 80 phr, wiederum ganz besonders bevorzugt in Mengen von 0 - 50 phr, wenigstens aber 0,1 phr, insbesondere wenigstens aber 0,5 phr, zumindest eines Rußes. In einer besonders bevorzugten Ausführungsform hat der Ruß eine Iodzahl, gemäß ASTM D 1510, die auch als Iodabsorptionszahl bezeichnet wird, größer oder gleich 75 g / kg und einer DBP-Zahl größer oder gleich 80 cm³ /100g. Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Russtyps in der Kautschukmischung, insbesondere für Fahrzeugluftreifen, gewährleistet den bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Phase verwendet wird, es können aber auch verschiedene Russtypen in einer Phase eingemischt werden.

Wichtig ist hierbei, dass der Anteil des Rußes aus der ersten Phase A am Gesamtgehalt des Rußes in der erfindungsgemäßen Kautschukmischung ungleich des Anteils des Rußes aus der zweiten Phase B ist.

Die erste Phase A und die zweite Phase B der erfindungsgemäßen Kautschukmischung enthalten jeweils zumindest einen Weichmacher, wobei der Weichmacher bevorzugt ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle und / oder flüssige Polymer mit einem Molekulargewicht M_{w} zwischen 500 und 15000 g/mol und / oder so genannte Biomass-To-Liquid (BTL)-Öle.

De einzelne Phase enthält 0 - 100 phr, bevorzugt 0 - 80 phr, besonders bevorzugt 0 - 60 phr, wiederum besonders bevorzugt 0 - 30 phr, wenigstens 0,1 phr, insbesondere wenigstens 0, 5 phr, des Weichmachers.

Auch hierbei ist wichtig, dass der Anteil des Weichmachers aus der ersten Phase A am Gesamtgehalt des Weichmachers in der erfindungsgemäßen Kautschukmischung ungleich des Anteils des Weichmachers aus der zweiten Phase B ist.

Es können in der Kautschukmischung, jeweils der Zusammensetzung A und der Zusammensetzung B, noch 0 - 20 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis sein.

In der ersten Phase A und / oder in der zweiten Phase B kann bzw. können noch 0 - 30 phr, wenigstens 0,1 phr, insbesondere wenigstens 0,5 phr, zumindest eines weiteren zusätzlichen Weichmachers vorhanden sein. Dieser weitere Weichmacher kann ein synthetischer Weichmacher und / oder eine Fettsäure und / oder ein Fettsäureester und / oder ein Fettsäurederivat und / oder ein Harz und / oder ein Faktis sein, wobei Fettsäureester, bevorzugt in Pflanzenöl vorkommend, favorisiert wird.

Bevorzugt ist es, wenn das Fettsäureester enthaltende Pflanzenöl ausgewählt ist aus der Gruppe, bestehend aus Rapsöl und / oder Sonnenblumenöl und / oder Olivenöl und / oder Erdnussöl und / oder Sojaöl und / oder Leinöl und / oder Kürbiskernöl und / oder Maiskeimöl und / oder Baumwollsaatöl und / oder Palmkernöl und / oder Teesamenöl und / oder Haselnussöl und / oder Walnussöl und / oder Rizinusöl und / oder Reisöl und / oder Maisöl und / oder Palmöl, wobei Rapsöl und / oder Sonnenblumenöl bevorzugt sind.

Wie bereits erwähnt, ist es wichtig, dass der Anteil des Weichmachers aus der ersten Phase A am Gesamtgehalt des Weichmachers in der erfindungsgemäßen Kautschukmischung ungleich des Anteils des Weichmachers aus der zweiten Phase B ist.

Weiterhin enthält die die erste Phase A und / oder die zweite Phase B noch 2 - 30 phr weitere Zusatzstoffe.

Weitere Zusatzstoffe beinhaltet im Wesentlichen Alterungsschutzmittel, Ozonschutzmittel, organische und anorganische Aktivatoren und Verarbeitungshilfsmittel.

Im Gesamtmengenanteil der weiteren Zusatzstoffe finden sich noch 0,1 - 10 phr, bevorzugt 0,2 - 8 phr, besonders bevorzugt 0,2 - 4 phr, Zinkoxid.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Im Gesamtvolumen der Kautschukmischung, bestehend aus einer ersten Phase A und einer zweiten Phase B, sind 0,2 - 20 phr, bevorzugt 0,2 - 10 phr, zumindest eines Vulkanisationssystems enthalten, wobei das Vulkanisationssystem aus zumindest einem Vulkanisationsbeschleuniger und / oder zumindest einer schwefelspendenden Substanz und / oder freiem Schwefel besteht.

Der Vulkanisationsbeschleuniger ist bevorzugt ausgewählt aus der Gruppe enthaltend: Thiazolbeschleuniger, Mercaptobeschleuniger, Sulfenamidbeschleuniger, Guanidinbeschleuniger, Thiurambeschleuniger, Dithiocarbamatbeschleuniger, Dithiophosphatbeschleuniger, Aminbeschleuniger, Thioharnstoffe und / oder sonstige Beschleuniger;

Einige dieser Vulkanisationsbeschleuniger können zugleich als schwefelspendende Substanz wirken. Schwefel und / oder schwefelspendende Substanzen werden bevorzugt in Mengen von 0,2 - 4 phr, bevorzugt in Mengen von 0,2 - 2,5 phr verwendet.

Der Erfindung liegt die zum anderen die Aufgabe zu Grunde, ein Verfahren zur Herstellung einer Kautschukmischung mit verbessertem Steifigkeitsverhalten, insbesondere bei niedrigen Temperaturen, bereitzustellen.

Gelöst wird diese Aufgabe durch ein Verfahren, bei dem die erste Phase A gemäß den Kennzeichen der Ansprüche 1 bis 59 und die zweite Phase B gemäß den Kennzeichen der Ansprüche 1 bis 59 jeweils separat in einem Mischer in wenigstens einer Mischstufe hergestellt werden. Bei dem Mischer handelt es sich bevorzugt um einen Tandemmischer. Ein solcher Tandemmischer ist dem Fachmann beispielsweise aus DE 3702833 C2 oder aus DE 10061473 A1 bekannt.

Die Mischtemperatur zur Herstellung der ersten Phase A und / oder die Mischtemperatur zur Herstellung der zweiten Phase B beträgt jeweils 70 bis 160°C, während sich die jeweilige Mischzeit jeweils auf 0,5 bis 10 min beläuft.

Wichtig hierbei ist, dass sich die beiden Phasen A und B in ihrer qualitativen und / oder quantitativen Zusammensetzung jeweils voneinander unterscheiden.

Die erste Phase A und die zweite Phase B werden gleichzeitig mit dem

Vulkanisationssystem in einem Mischer, bevorzugt einem Tandemmischer, mit wenigstens einem Stempel in einer Mischstufe oder auf einem Walzwerk oder in einem Mischextruder miteinander vermengt, wobei die Mischzeit im Mischer nach Absenken des Stempels oder die Mischzeit auf dem Walzwerk 0,2 bis 4 Minuten und die Verweilzeit der ersten Phase A und / oder die Verweilzeit der zweiten Phase B und / oder die Verweilzeit des Vulkanisationssystems im Mischextruder 0,1 bis 2 Minuten beträgt.

Die Mischtemperatur liegt hierbei bei allen Verarbeitungsgeräten bei 60 bis 200°C, bevorzugt bei 80 bis 160°C. Dadurch wird eine so genannte Fertigmischung erhalten.

Die jeweiligen Verarbeitungsgeräte sind dem Fachmann hinreichend bekannt, da sie alle in der Kautschukindustrie seit Jahrzehnten verwendet werden. Hilfsweise sei hierzu trotzdem auf das "Handbuch der Kautschuktechnologie", Dr. Gupta Verlag, 2001, Kapitel 10.1, 10.2 und 10.5 verwiesen.

Erfindungswesentlich ist zudem, dass das Verhältnis des Masseanteils der ersten Phase A zu dem Masseanteil der zweiten Phase B von 4:1 bis 1,1:1, bevorzugt von 4:1 bis 1,3:1 , besonders bevorzugt von 4:1 bis 1,5:1, beträgt, jeweils bezogen auf die Gesamtmasse.

Nur mit den genannten Bedingungen zeigt die erhaltene Kautschukmischung die Separierung der einzelnen Phasen, hier als erste Phase A und als zweite Phase B bezeichnet, auf. Die so erhaltene "Inselstruktur", ist optisch sichtbar und bewirkt das verbesserte Steifigkeitsverhalten.

Die Kautschukmischung, die bevorzugt nach dem gemäß Kennzeichen der Ansprüche 60 bis 71 definierten Verfahrens hergestellt wird, findet in Fahrzeugluftreifen, insbesondere im Laufstreifen eines Reifens und / oder in einer Body-Mischung eines Reifens, und in Riemen und Gurten Verwendung.

Zur Verwendung in Fahrzeugluftreifen wird die fertige Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.

Die weitere Verarbeitung der fertigen Mischung zur Verwendung als Body- Mischung in Fahrzeugreifen erfolgt wie bereits für den Laufstreifen beschrieben. Der Unterschied liegt in der Formgebung nach dem Extrusionsvorgang. Die so erhaltenen Formen der fertigen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die fertige Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Die Erfindung soll nun anhand von Vergleichs- und Ausführungsbeispielen, die in Tabellen 1a bzw. 1b und 2 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. P1 bis P4 stellen jeweils die einzelnen Vormischungen dar.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Abkürzungen MS1 und MS2 stehen jeweils für Mischstufe 1und Mischstufe 2. Die Mischungsherstellung erfolgte gemäß Kennzeichen der Ansprüche 60 bis 71 in einem Labortangentialmischer.

Aus sämtlichen Mischungen wurden Prüfkörper durch Vulkanisation hergestellt und mit diesen Prüfkörpern für die Kautschukindustrie typische Materialeigenschaften bestimmt. Für die Tests an den einzelnen Prüfkörpern wurden folgende Testverfahren angewandt:
- Shore-A-Härte bei Raumtemperatur gemäß DIN 53 505
- Rückprallelastizität bei Raumtemperatur und 70°C gemäß DIN 53 512
- Spannungswerte bei 100 und 300 % Dehnung bei Raumtemperatur gemäß DIN 53 504
- Zugfestigkeit bei Raumtemperatur gemäß DIN 53 504
- Abrieb nach Grosch gemäß Grosch, K.A., the 131th ACS Rubber Div. Meeting, No. 97 (1987) und Grosch, K.A. et al., Kautschuk Gummi Kunststoffe, 50, 841 (1997)
- Verlustfaktor tan δ, bei 55°C und 8% Dehnung aus dynamisch-mechanischer Messung gemäß DIN 53 513, Messung in Kompression
- Verlustfaktor tan δ, bei 0°C und 0,2% Dehnung aus dynamisch-mechanischer Messung gemäß DIN 53 513
- Speichermodul E', bei 55°C und 0,1% Dehnung aus dynamisch-mechanischer Messung gemäß DIN 53 513
- Verlustfaktor tan δ, bei 70°C und 7% Dehnung aus dynamisch-mechanischer Messung gemäß DIN 53 513, Messung in Torsion

**Tabelle 1a**

| **Bestandteile** | **Einheit** | **P1** | **P2** | **P3** | **P4** |
|---|---|---|---|---|---|
| Polyisopren | phr | -- | -- | 100 | 100 |
| BR^{a} | phr | 100 | 100 | -- | -- |
| Kieselsäure^{b} | phr | 87 | 87 | 87 | 87 |
| Weichmacher^{c} | phr | 40 | 40 | 40 | 40 |
| Ruß, N121 | phr | 19 | 19 | 19 | 19 |
| ZnO | phr | 3 | 3 | 3 | 3 |
| Silan^{d} | phr | 5,6 | 5,6 | 5,6 | 5,6 |
| Silan^{e} | phr | 2 | -- | 2 | -- |
| Alterungsschutzmittel /Ozonschutzmittel | phr | 6,5 | 6,5 | 6,5 | 6,5 |

| | | | | | |
|---|---|---|---|---|---|
| ^{a} HV-BR, Budene 7076, Goodyear Chemical, Styrol-Anteil: 0 Gew.-%, Vinyl-Anteil: 76 Gew.-% ^{b} Zeosil 1165MP™, Rhodia Ltd., CTAB-Oberfläche: 155 m²/g ^{c} TDAE ^{d} Sitquest® A1589, General Electric Speciality ^{e} Si69, Fa. Evonik | | | | | |

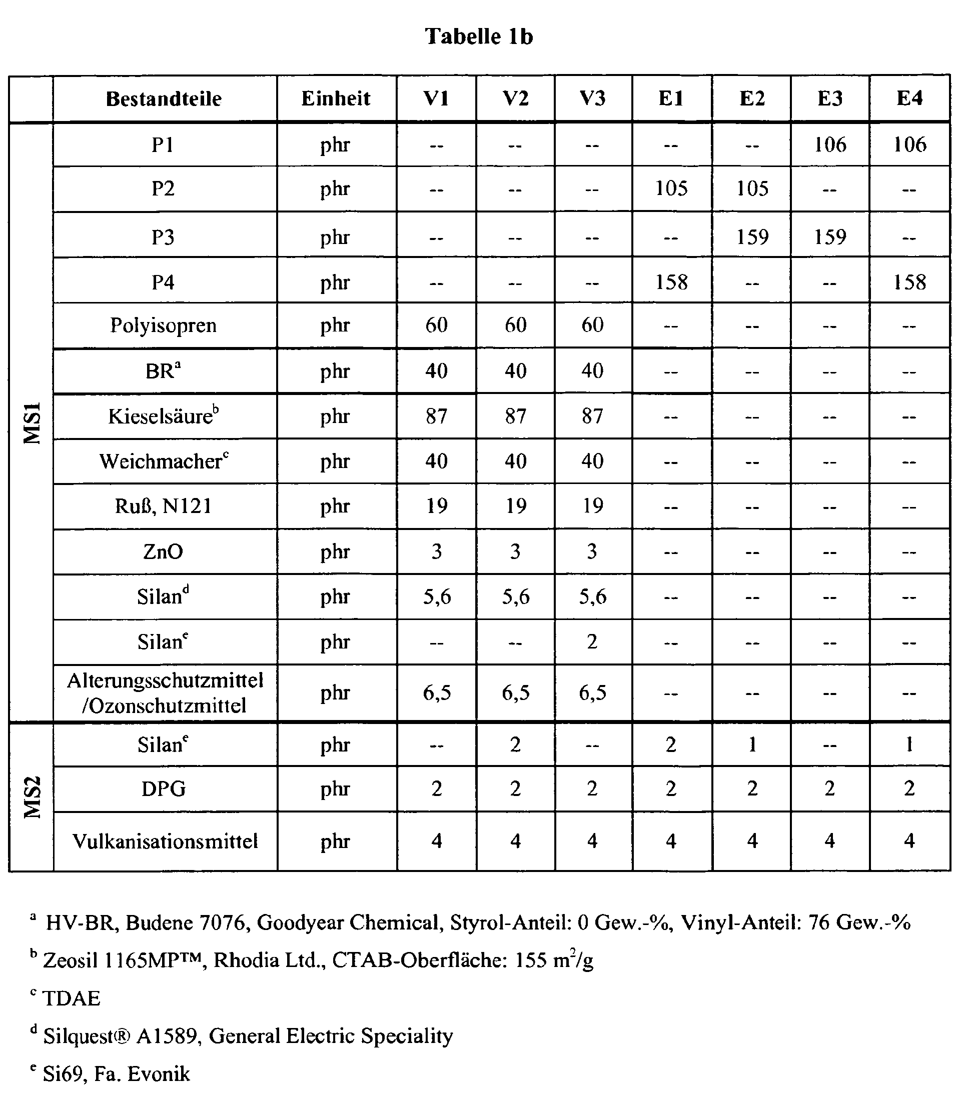

**Tabelle 2**

| **Eigenschaften** | **Einheit** | **V1** | **V2** | **V3** | **E1** | **E2** | **E3** | **E4** |
|---|---|---|---|---|---|---|---|---|
| Härte bei RT | Shore A | 61 | 65 | 65 | 66 | 67 | 72 | 66 |
| Rückprall bei RT | % | 25 | 25 | 25 | 25 | 27 | 25 | 26 |
| Spannungswert 100% | MPa | 2,1 | 2,4 | 2,6 | 2,7 | 2,9 | 3,3 | 2,5 |
| Spannungswert 200% | MPa | 5,2 | 6,2 | 6,7 | 6,0 | 7,2 | 7,5 | 5,4 |
| Zugfestigkeit bei RT | MPa | 13,2 | 13,0 | 14,4 | 7,2 | 6,4 | 10,0 | 7,6 |
| tan δ (0°C, 0,2%, 10Hz) | | 0,360 | 0,368 | 0,357 | 0,391 | 0,371 | 0,365 | 0,400 |
| Rating tan δ (0°C, 0,2% 10Hz) | % | 100 | 102 | 99 | 109 | 103 | 101 | 111 |
| tan δ (55°C, 8%, 10Hz) | | 0,204 | 0,185 | 0,186 | 0,213 | 0,220 | 0,210 | 0,205 |
| Rating tan δ (55°C, 8%, 10Hz) | % | 100 | 110 | 110 | 96 | 93 | 97 | 100 |
| tan δ (70°C, 70%, 1Hz) | | 0,235 | 0,222 | 0,226 | 0,257 | 0,258 | 0,234 | 0,213 |
| Rating tan δ (70°C, 7%, 1Hz) | % | 100 | 106 | 104 | 91 | 91 | 100 | 110 |
| E' (55°C, 0,1%, 10Hz) | MPa | 12,24 | 11,66 | 13,21 | 14,22 | 15,40 | 16,44 | 14,78 |
| Rating E' ( 55°C, 0,10%, 10Hz) | % | 100 | 95 | 108 | 116 | 126 | 134 | 121 |

Der Verlustfaktor tan δ ist ein Relativmaß für den Energieverlust im Vergleich zur wiedergewonnenen Energie. Diese so genannte Hysterese ist im Temperaturbereich um 55°C und bei 8% Dehnung - gemessen nach DIN 53 513 und gemäß der WLF-Transformation (siehe J. Schnetger "Lexikon der Kautschuktechnik", Hüthig-Verlag, 3. Auflage, 2004, S. 609ff) - ist ein Maß für das Rollwiderstandsverhalten einer Kautschukmischung.

Hier zeigen die erfindungsgemäße Mischungen E1 bis E4 ein neutrales Verhalten gegenüber der Vergleichsmischung V1.

Bei einer Messung, die mit einem Rubber Process Analyzer (RPA) der Firma alphatechnologies durchgeführt wurde, ist unter scherförmiger Deformation und bei einer Auslenkung von 7 % bei 70 °C sogar ein Vorteil im Rollwiderstandsverhalten auszumachen (+10 %). In dieser Messung übersteigt dieser Vorteil zudem die positiven Veränderungen der Vergleichsmischungen V2 und V3 um 4% und 6% gegenüber z.B. E4.

Im Temperaturbereich um 0 °C und bei einer Dehnung von 0,2% stellt der Verlustfaktor tan δ den Wert für die Griffigkeit des Vulkanisats dar. Hier zeigt sich z.B. bei E4 überraschenderweise eine deutliche Verbesserung von 9-12% gegenüber allen drei Vergleichsmischungen (V1, V2 und V3).

Der Speichermodul E' im Temperaturbereich um 55°C und bei 0,1% Dehnung beschreibt das Steifigkeitsverhalten einer Mischung. Hier weist z.B. die Mischung E4 eine ebenfalls überraschende deutliche Verbesserung um etwa 21% auf.

Die Verbesserung der Griffigkeit steht im Zielkonflikt mit einer Verbesserung des Rollwiderstands. Ihre überraschende Verbesserung bei einer gleich bleibenden, bzw. in der Tendenz positiven Rollwiderstandscharakteristik stellt eine bedeutende Verbesserung des Standes der Technik dar.

## Patentansprüche

1. Kautschukmischung, **dadurch gekennzeichnet, dass** sie aus einer ersten Phase A, die zumindest einen polaren oder unpolaren Kautschuk, zumindest eine Kieselsäure und zumindest einen Weichmacher enthält, und einer zweiten Phase B, die zumindest einen polaren oder unpolaren Kautschuk, zumindest eine Kieselsäure und zumindest einen Weichmacher enthält, besteht.

2. Kautschukmischung nach Anspruch 1, **dadurch gekennzeichnet, dass** sie 60 - 80 % der ersten Phase A und 20 - 40 % der zweiten Phase B, jeweils bezogen auf das Gesamtvolumen, enthält.

3. Kautschukmischung nach Anspruch 1 oder 2, **dadurch gekennzeichnet, dass** der polare oder unpolare Kautschuk der ersten Phase A und / oder der polare oder unpolare Kautschuk der zweiten Phase B ausgewählt ist aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder Halonitrilbutylkautschuk und / oder Isopren-Butadien-Copolymer.

4. Kautschukmischung nach einem der Ansprüche 1 bis 3, **dadurch gekennzeichnet, dass** der polare oder unpolare Kautschuk oder die polaren oder unpolaren Kautschuke der ersten Phase A unterschiedlich ist bzw. sind im Vergleich zu dem polaren oder unpolaren Kautschuk oder den polaren oder unpolaren Kautschuken der zweiten Phase B.

5. Kautschukmischung nach Anspruch 4, **dadurch gekennzeichnet, dass** der polare oder unpolare Kautschuk oder die polaren oder unpolaren Kautschuke der ersten Phase A thermodynamisch nicht mischbar mit dem polaren oder unpolaren Kautschuk oder den polaren oder unpolaren Kautschuken der zweiten Phase B ist bzw. sind.

6. Kautschukmischung nach einem der Ansprüche 1 bis 5, **dadurch gekennzeichnet, dass** der polare oder unpolare Kautschuk der ersten Phase A ein natürliches oder synthetisches Polyisopren ist.

7. Kautschukmischung nach einem der Ansprüche 1 bis 6, **dadurch gekennzeichnet, dass** der polare oder unpolare Kautschuk der zweiten Phase B ein Butadienkautschuk oder ein Styrolbutadienkautschuk ist.

8. Kautschukmischung nach Anspruch 1, **dadurch gekennzeichnet, dass** Anteil der Kieselsäure aus der ersten Phase A am Gesamtgehalt der Kieselsäure ungleich des Anteils der Kieselsäure aus der zweiten Phase B am ist.

9. Kautschukmischung nach einem der Ansprüche 1 oder 8, **dadurch gekennzeichnet, dass** die Kieselsäure der ersten Phase A und die Kieselsäure der zweiten Phase B jeweils durch zumindest ein Kupplungsagens angebunden ist bzw. sind.

10. Kautschukmischung nach Anspruch 9, **dadurch gekennzeichnet, dass** das Kupplungsagens eine Silizium-organische Verbindung ist, wobei die Silizium-organische Verbindung der ersten Phase A gleich oder verschieden der Siliziumorganischen Verbindung der zweiten Phase B ist.

11. Kautschukmischung nach einem der Ansprüche 1 bis 10, **dadurch gekennzeichnet, dass** der Füllstoff der ersten Phase A und / oder der Füllstoff der zweiten Phase B Ruß ist.

12. Kautschukmischung nach Anspruch 11, **dadurch gekennzeichnet, dass** der Anteil des Rußes aus der ersten Phase A am Gesamtgehalt des Rußes ungleich des Anteils des Rußes aus der zweiten Phase B ist.

13. Kautschukmischung nach einem der Ansprüche 1 bis 12, **dadurch gekennzeichnet, dass** der Weichmacher der ersten Phase A und / oder der Weichmacher der zweiten Phase B ein Mineralöl ist.

14. Kautschukmischung nach einem der Ansprüche 1 bis 13, **dadurch gekennzeichnet, dass** der Anteil des Weichmachers aus der ersten Phase A am Gesamtgehalt des Weichmachers ungleich des Anteils des Weichmachers aus der zweiten Phase B ist.

15. Verfahren zur Herstellung einer Kautschukmischung nach einem der Ansprüche 1 bis 14, **dadurch gekennzeichnet, dass** die erste Phase A separat in einem Mischer, insbesondere in einem Tandemmischer, in wenigstens einer Mischstufe hergestellt wird.

16. Verfahren zur Herstellung einer Kautschukmischung nach einem der Ansprüche 1 bis 15, **dadurch gekennzeichnet, dass** die zweite Phase B separat in einem Mischer, insbesondere in einem Tandemmischer, in wenigstens einer Mischstufe hergestellt wird.

17. Verfahren nach einem der Ansprüche 15 bis 16, **dadurch gekennzeichnet, dass** sich die beiden Phasen A und B in ihrer qualitativen und / oder quantitativen Zusammensetzung jeweils voneinander unterscheiden.

18. Verfahren nach einem der Ansprüche 15 bis 17, **dadurch gekennzeichnet, dass** die erste Phase A und die zweite Phase B gleichzeitig mit dem Vulkanisationssystem in einem Mischer, insbesondere in einem Tandemmischer, mit wenigstens einem Stempel in einer Mischstufe oder auf einem Walzwerk oder in einem Mischextruder miteinander vermengt werden.

19. Verfahren nach einem der Ansprüche 15 bis 18, **dadurch gekennzeichnet, dass** das Verhältnis des Masseanteils der ersten Phase A zu dem Masseanteil der zweiten Phase B von 4:1 bis 1,1:1 beträgt, jeweils bezogen auf die Gesamtmasse.

20. Verwendung einer Kautschukmischung nach einem der Ansprüche 1 bis 19 zur Herstellung eines Reifens.

21. Verwendung einer Kautschukmischung nach Anspruch 20 zur Herstellung des Laufstreifens oder einer Body-Mischung eines Reifens.

## Claims

1. Rubber mixture, **characterized in that** it is composed of a first phase A which comprises at least one polar or nonpolar rubber, at least one silica and at least one plasticizer and of a second phase B which comprises at least one polar or nonpolar rubber, at least one silica and at least one plasticizer.

2. Rubber mixture according to Claim 1, **characterized in that** it comprises from 60 to 80% of the first phase A and from 20 to 40% of the second phase B, based in each case on the entire volume.

3. Rubber mixture according to Claim 1 or 2, **characterized in that** the polar or nonpolar rubber of the first phase A and/or the polar or nonpolar rubber of the second phase B has been selected from the group consisting of natural polyisoprene and/or synthetic polyisoprene and/or butadiene rubber and/or styrenebutadiene rubber and/or solution-polymerized styrenebutadiene rubber and/or emulsion-polymerized styrenebutadiene rubber and/or liquid rubbers and/or halobutyl rubber and/or polynorbornene and/or isoprene/isobutylene copolymer and/or ethylene-propylene-diene rubber and/or nitrile rubber and/or chloroprene rubber and/or acrylate rubber and/or fluoro rubber and/or silicone rubber and/or polysulphide rubber and/or epichlorohydrin rubber and/or styrene-isoprene-butadiene terpolymer and/or halonitrile butyl rubber and/or isoprene-butadiene copolymer.

4. Rubber mixture according to any of Claims 1 to 3, **characterized in that** the polar or nonpolar rubber or the polar or nonpolar rubbers of the first phase A is or are different from the polar or nonpolar rubber or the polar or nonpolar rubbers of the second phase B.

5. Rubber mixture according to Claim 4, **characterized in that** the polar or nonpolar rubber or the polar or nonpolar rubbers of the first phase A is or are thermodynamically immiscible with the polar or nonpolar rubber or the polar or nonpolar rubbers of the second phase B.

6. Rubber mixture according to any of Claims 1 to 5, **characterized in that** the polar or nonpolar rubber of the first phase A is a natural or synthetic polyisoprene.

7. Rubber mixture according to any of Claims 1 to 6, **characterized in that** the polar or nonpolar rubber of the second phase B is a butadiene rubber or a styrenebutadiene rubber.

8. Rubber mixture according to Claim 1, **characterized in that** the proportion of the silica from the first phase A, based on the entire silica content, is not equal to the proportion of the silica from the second phase B.

9. Rubber mixture according to Claim 1 or 8, **characterized in that** the silica of the first phase A and the silica of the second phase B respectively has or have coupling via at least one coupling agent.

10. Rubber mixture according to Claim 9, **characterized in that** the coupling agent is an organosilicon compound, where the organosilicon compound of the first phase A is identical with or different from the organosilicon compound of the second phase B.

11. Rubber mixture according to any of Claims 1 to 10, **characterized in that** the filler of the first phase A and/or the filler of the second phase B is carbon black.

12. Rubber mixture according to Claim 11, **characterized in that** the proportion of the carbon black from the first phase A, based on the entire carbon black content, is not equal to the proportion of the carbon black from the second phase B.

13. Rubber mixture according to any of Claims 1 to 12, **characterized in that** the plasticizer of the first phase A and/or the plasticizer of the second phase B is a mineral oil.

14. Rubber mixture according to any of Claims 1 to 13, **characterized in that** the proportion of the plasticizer from the first phase A, based on the entire plasticizer content, is not equal to the proportion of the plasticizer from the second phase B.

15. Process for producing a rubber mixture according to any of Claims 1 to 14, **characterized in that** the first phase A is produced separately in a mixer, in particular in a tandem mixer, in at least one mixing stage.

16. Process for producing a rubber mixture according to any of Claims 1 to 15, **characterized in that** the second phase B is produced separately in a mixer, in particular in a tandem mixer, in at least one mixing stage.

17. Process according to Claim 15 or 16, **characterized in that** the two phases A and B respectively differ from one another in their qualitative and/or quantitative constitution.

18. Process according to any of Claims 15 to 17, **characterized in that** the first phase A and the second phase B are mixed with one another simultaneously with the vulcanization system in a mixer, in particular in a tandem mixer, with at least one ram, in a mixing stage, or on a roll mill, or in a mixing extruder.

19. Process according to any of Claims 15 to 18, **characterized in that** the ratio of the proportion by mass of the first phase A to the proportion by mass of the second phase B is from 4:1 to 1.1:1, in each case based on the total mass.

20. Use of a rubber mixture according to any of Claims 1 to 19 for producing a tyre.

21. Use of a rubber mixture according to Claim 20 for producing the tread or a body mixture of a tyre.

## Revendications

1. Mélange de caoutchouc, **caractérisé en ce qu'**il est constitué d'une première phase A, qui contient au moins un caoutchouc polaire ou apolaire, au moins une silice et au moins un plastifiant, et d'une seconde phase B, qui contient au moins un caoutchouc polaire ou apolaire, au moins une silice et au moins un plastifiant.

2. Mélange de caoutchouc selon la revendication 1, **caractérisé en ce qu'**il contient 60 à 80 % de la première phase A et 20 à 40 % de la seconde phase B, à chaque fois par rapport au volume total.

3. Mélange de caoutchouc selon la revendication 1 ou 2, **caractérisé en ce que** le caoutchouc polaire ou apolaire de la première phase A et/ou le caoutchouc polaire ou apolaire de la seconde phase B est choisi dans le groupe constitué par le polyisoprène naturel et/ou le polyisoprène synthétique et/ou le caoutchouc de butadiène et/ou le caoutchouc de styrène-butadiène et/ou le caoutchouc de styrène-butadiène polymérisé en solution et/ou le caoutchouc de styrène-butadiène polymérisé en émulsion et/ou les caoutchoucs liquides et/ou le caoutchouc d'halobutyle et/ou le polynorborbène et/ou le copolymère d'isoprène-isobutylène et/ou le caoutchouc d'éthylène-propylène-diène et/ou le caoutchouc de nitrile et/ou le caoutchouc de chloroprène et/ou le caoutchouc d'acrylate et/ou le caoutchouc fluoré et/ou le caoutchouc de silicone et/ou le caoutchouc de polysulfure et/ou le caoutchouc d'épichlorhydrine et/ou le terpolymère de styrène-isoprène-butadiène et/ou le caoutchouc d'halonitrile-butyle et/ou le copolymère d'isoprène-butadiène.

4. Mélange de caoutchouc selon l'une quelconque des revendications 1 à 3, **caractérisé en ce que** le caoutchouc polaire ou apolaire ou les caoutchoucs polaires ou apolaires de la première phase A est ou sont différents en comparaison du caoutchouc polaire ou apolaire ou des caoutchoucs polaires ou apolaires de la seconde phase B.

5. Mélange de caoutchouc selon la revendication 4, **caractérisé en ce que** le caoutchouc polaire ou apolaire ou les caoutchoucs polaires ou apolaires de la première phase A n'est ou ne sont pas mélangeables thermodynamiquement avec le caoutchouc polaire ou apolaire ou les caoutchoucs polaires ou apolaires de la seconde phase B.

6. Mélange de caoutchouc selon l'une quelconque des revendications 1 à 5, **caractérisé en ce que** le caoutchouc polaire ou apolaire de la première phase A est un polyisoprène naturel ou synthétique.

7. Mélange de caoutchouc selon l'une quelconque des revendications 1 à 6, **caractérisé en ce que** le caoutchouc polaire ou apolaire de la seconde phase B est un caoutchouc de butadiène ou un caoutchouc de styrène-butadiène.

8. Mélange de caoutchouc selon la revendication 1, **caractérisé en ce que** la proportion de la silice de la première phase A par rapport à la teneur totale de la silice est différente de la proportion de la silice de la seconde phase B.

9. Mélange de caoutchouc selon l'une quelconque des revendications 1 ou 8, **caractérisé en ce que** la silice de la première phase A et la silice de la seconde phase B sont chacune reliées par au moins un agent de couplage.

10. Mélange de caoutchouc selon la revendication 9, **caractérisé en ce que** l'agent de couplage est un composé organique de silicium, le composé organique de silicium de la première phase A étant identique ou différent du composé organique de silicium de la seconde phase B.

11. Mélange de caoutchouc selon l'une quelconque des revendications 1 à 10, **caractérisé en ce que** la charge de la première phase A et/ou la charge de la seconde phase B sont de la suie.

12. Mélange de caoutchouc selon la revendication 11, **caractérisé en ce que** la proportion de la suie de la première phase A par rapport à la teneur totale de la suie est différente de la proportion de la suie de la seconde phase B.

13. Mélange de caoutchouc selon l'une quelconque des revendications 1 à 12, **caractérisé en ce que** le plastifiant de la première phase A et/ou le plastifiant de la seconde phase B sont une huile minérale.

14. Mélange de caoutchouc selon l'une quelconque des revendications 1 à 13, **caractérisé en ce que** la proportion du plastifiant de la première phase A par rapport à la teneur totale du plastifiant est différente de la proportion du plastifiant de la seconde phase B.

15. Procédé de fabrication d'un mélange de caoutchouc selon l'une quelconque des revendications 1 à 14, **caractérisé en ce que** la première phase A est fabriquée séparément dans un mélangeur, notamment dans un mélangeur tandem, en au moins une étape de mélange.

16. Procédé de fabrication d'un mélange de caoutchouc selon l'une quelconque des revendications 1 à 15, **caractérisé en ce que** la seconde phase B est fabriquée séparément dans un mélangeur, notamment dans un mélangeur tandem, en au moins une étape de mélange.

17. Procédé selon l'une quelconque des revendications 15 à 16, **caractérisé en ce que** les deux phases A et B diffèrent respectivement l'une de l'autre par leur composition qualitative et/ou quantitative.

18. Procédé selon l'une quelconque des revendications 15 à 17, **caractérisé en ce que** la première phase A et la seconde phase B sont mélangées l'une avec l'autre simultanément avec le système de vulcanisation dans un mélangeur, notamment dans un mélangeur tandem, comprenant au moins un piston en une étape de mélange ou sur un laminoir ou dans une extrudeuse de mélange.

19. Procédé selon l'une quelconque des revendications 15 à 18, **caractérisé en ce que** le rapport entre la proportion massique de la première phase A et la proportion massique de la seconde phase B est de 4:1 à 1,1:1, à chaque fois par rapport à la masse totale.

20. Utilisation d'un mélange de caoutchouc selon l'une quelconque des revendications 1 à 19 pour la fabrication d'un pneu.

21. Utilisation d'un mélange de caoutchouc selon la revendication 20 pour la fabrication de la bande de roulement ou d'un mélange de carcasse d'un pneu.
